# EUROPEAN PATENT SPECIFICATION

(11) **EP 1 563 682 B1**
(45) Date of publication and mention of the grant of the patent: **26.03.2008**
(21) Application number: 03751165.6
(22) Date of filing: 20.10.2003
(51) Int. Cl.: H04N 7/16, H04N 5/455

(54) **METHOD AND APPARATUS FOR PROVIDING A SELECTION LIST OF CONTENT ITEMS**
VERFAHREN UND VORRICHTUNG ZUR BEREITSTELLUNG EINER LISTE ZUR AUSWAHL VON INHALTEN
PROCEDE ET APPAREIL FOURNISSANT UNE LISTE PERMETTANT DE SELECTIONNER DES ELEMENTS DE CONTENU

(30) Priority: 08.11.2002 EP 02079683
(43) Date of publication of application: 17.08.2005
(73) Proprietor: Koninklijke Philips Electronics N.V., 5621 BA Eindhoven (NL)
(72) Inventor: LEURS, Nathalie, D., P., NL-5656 AA Eindhoven (NL)
(74) Representative: Groenendaal, Antonius W. M.
(86) International application number: PCT/IB2003/004648
(87) International publication number: WO 2004/043070

(56) References cited:
- WO-A-01/39494
- WO-A-01/47238
- WO-A-99/30492
- US-A1- 2001 013 126
- CHVATIK D.: 'REVIEW OF ITUNES 1.0', [Online] February 2001, pages 1 - 14 Retrieved from the Internet: <URL:WWW.ATPM.COM/7.02/ITUNES.SHTML;> [retrieved on 2007-02-01]

## Description

### Field of the invention

The invention relates to a method and apparatus for providing a selection list of content items and in particular for providing a selection list to a user of a content item presentation device.

### Background of the invention

In recent years, the accessibility to, and provision of, information and content, such as TV programmes, film, music and books, etc. have increased explosively. The information and content may today be provided from many different sources, and the variety and availability of content has increased substantially.

For example, the number of available television channels in most countries has increased substantially in the last decade, and in many countries, viewers can receive tens or even hundreds of different TV channels. The TV channels are further provided from different broadcasters and sources, and are communicated through a variety of media including terrestrial radio broadcasts, cable distribution or satellite broadcasts. Similarly, the number of available radio channels has increased explosively and are provided through different media such as satellite broadcasts, digital terrestrial broadcasts, cable distribution or even through the Internet. Furthermore, available content may be provided in real-time format, through, for example, broadcasts, or may be provided on demand from, for example, a storage medium such as a Private Video Recorder (PVR).

As the available content has increased substantially, it has become increasingly difficult for a user to find and select the specific content that he is most interested in. Typically, a user selects content items from a list of available content. For example, a PVR has a functionality for displaying a list of recorded programmes which the user can select. Likewise, a television (TV) may display a list of different channels that the user can select by highlighting one option and activating a selection input, for example, in the form of a remote control. Similarly, a Compact Disc (CD) or MP3 player may list all the available songs, thereby allowing a specific song to be selected by a user.

However, as the number of available content items and sources has increased this selection method has become increasingly cumbersome and less attractive as a means of selecting a desired content item. Specifically, the size of the presented lists has increased substantially, and a typical selection list may now comprise tens, hundreds or even thousands of content items. This provides a significant problem to the user as it becomes increasingly difficult to find desired content items.

The document US2001/0013126 A1 discloses interactive program guide systems and related processes which can automatically tune a television, or program a VCR, based on program selections made from program schedule information displayed on a television or other suitable video monitor. The interactive program guide is preferably implemented using a microprocessor-controlled set-top box that is coupled to the viewer's television. The set-top box receives program schedule information and software from a headend telecasting center. Preferably, program schedule information for the current day and at least six subsequent days is stored in a memory within the set-top box. The interactive program guide provides a display mode for allowing the viewer to apply a restrictive search selection criterion and a nonrestrictive sort attribute to the program schedule information.

The document WO 99/30492 A1 discloses an electronic program guide which includes an alpha-sorting feature for generating a display listing program titles, and descriptive information associated with a highlighted one of the displayed program titles, according to a symbol selected by a viewer. A letter of the alphabet is displayed in a small window and titles that begin with the letter in the small window are displayed in a column in a second window. Details about the program having the highlighted title are displayed in an area adjacent to the large window. An EPG action can be invoked directly from this guide.

The document WO 01/47238 A2 discloses an interactive network-based personal video recording system. A user interface is provided that allows viewers to search a database of program guide information according to program title, indexed program attributes such as actor and director, and key words. Viewer interaction is by way of a remote control unit.

Consequently, an improved system for providing a selection list would be advantageous, and in particular a system for facilitating the identification and/or selection of content items having current suitable characteristics for the user would be an advantage.

### Object and summary of the invention

Accordingly, the invention seeks to mitigate, alleviate or eliminate one or more of the above-mentioned disadvantages singly or in any combination.

In particular, the inventor has realised that ordering a selection list in response to a duration indication of a content item may provide an improved system for providing a selection list, and can facilitate identification and/or selection of one or more content items.

According to a first aspect of the invention, a method of providing a selection list of content items comprises as the steps of: receiving a plurality of content items from at least one content source; determining a content item duration indication for each of the plurality of content items; determining an ordered content item list by ordering the plurality of content items in response to the content item duration indication of each content item; and presenting the ordered content item list as the selection list to a user.

The selection list may thus be ordered according to a characteristic associated with a duration parameter of the content items. For example, the selection list may be presented in an order of increasing or decreasing value of the content item duration indication. Thereby, the user may be presented a selection list arranged in order of the user's preference for the content item duration indicator. Hence, the identification of content items having a preferred content item duration indication is facilitated, as is the selection of such content items. The content items may be received from external or internal sources. The external sources may include broadcasts or other distribution means. Internal sources may include internally generated content items, or content items retrieved or retrievable from an internal content item storage. The content item duration indication may specifically relate to a time characteristic.

According to a feature of the invention, the content item duration indication is determined in response to a total duration of each content item. Hence, the selection list may be a content item list ordered in response to a total duration of each content item. This allows identification and/or selection to be facilitated by arranging and grouping the content items of a suitable duration. Hence, a user may have a given time interval available for a content item, and therefore may be specifically interested in accessing a content item having a duration substantially equivalent to the time interval. He may therefore navigate through the selection list to a section, wherein the content items have durations corresponding to the time interval. The user will then be presented with the content items of the list having a suitable duration.

According to another feature of the invention, the content item duration indication is determined in response to a remaining duration of each content item. For example, a content item may be received from a broadcast source and at a given point of time may only have been partially received. The selection list of ordered content items may include this information and therefore be ordered to reflect the duration of a content item that is currently available to the user. As another example, a content item may be received from a content item storage. A part of the stored content item may have been presented to the user previously. In this example, the remaining duration may relate to the duration of the content item remaining to be presented to the user. The list may comprise some content items which have reduced remaining duration as well as content items wherein the remaining duration and the total duration are currently the same. Hence, the list may be ordered in response to the remaining time, wherein a user is assisted in identifying and/or selecting content items suited for a given available time interval.

According to another feature of the invention, the content item duration indication is determined in response to a remaining duration of each content item relative to a total duration of each content item. Preferably, the content item duration indication comprises an indication of a fraction of a remaining duration of each content item with respect to the total duration of each content item. For example, a percentage of the remaining duration relative to the total duration may be used to order the content items of the selection list. This may advantageously assist the user in selecting of content items that suit his current requirements or wishes.

According to another feature of the invention, the content item duration indication is determined in response to a received duration of each content item. Some content items may be, for example, only partially received from a broadcast source, whereas other content items may be fully received. Hence, the user may be assisted in identifying content items that have a received duration which is at least as long as a current preferred viewing interval for the user.

According to another feature of the invention, the content item duration indication is determined in response to a presented duration of each content item relative to a total duration of each content item. Preferably, the content item duration indication comprises an indication of a fraction of a presented duration of each content item with respect to the total duration of each content item. For example the percentage of a content item that has been presented may be used in the ordering of content items. This assists the user in identifying and/or selecting content items in response to a duration of the content items that have already been presented.

According to the invention as set out in the appended claims, the method comprises the steps of: determining a second content item duration indication for each of the plurality of content items; the second content item duration indication being different from the content item duration indication; and wherein the step of determining an ordered content item list comprises ordering the plurality of content items in response to the content item duration indication of each content item or in response to the second content item duration indication of each content item in response to a user preference.

The second content item duration may be, for example, a total duration of each content item, a remaining duration of each content item, a remaining duration of each content item relative to a total duration of each content item, a received duration of each content item or a presented duration of each content item relative to a total duration of each content item. The selection list may therefore be ordered in response to a first or second criterion in response to a user preference. This provides the advantage of the content items of the selection list being ordered in a way that is specifically suited for the user. Specifically, the user preference may be modified dynamically and thus the ordering of the content items in the selection list may be optimised to suit the user's current needs and wishes. The user preference may be automatically determined, for example, on the basis of the previous behaviour and preferences of the user.

According to another feature of the invention, the user preference is determined in response to a user input. This allows the preferred ordering of the selection list to be selected in direct response to a user selection.

According to another feature of the invention, a single user activation causes the user preference to switch between being associated with the content item duration indication and being associated with the second content item duration indication. For example, a simple button pressed on a remote control may switch between a first ordering and a second ordering, thereby allowing a very user-friendly method of changing the order of the content items in the selection list.

According to another feature of the invention, the method further comprises the step of determining the user preference in response to at least one previous user preference input. The previous user selections of a preferred order of content items may be used to set the user preference for the first or second ordering or to set the initial user preference for the first or second ordering.

According to another feature of the invention, the method further comprises the steps of determining a preferred user preference for different operating conditions; determining a current operating condition; and setting the user preference as the preferred user preference for the current operating condition. The ordering of the content items in the selection list may be selected in response to the current operating conditions, thereby allowing the selection list to be modified and suited for the current operating conditions.

According to another feature of the invention, the current operating condition is determined in response to at least one of the following characteristics: a time characteristic; a content source characteristic; and a content item content characteristic. These characteristics provide advantageous parameters in response to which the ordering of the content items in the selection list may be selected.

According to another feature of the invention, the plurality of content items includes at least one content item from the group of: video sources; video clips; audio sources; audio clips; multimedia sources; and multimedia clips. These content items are particularly suited for presentation to a user in a selection list wherein the content items are ordered in response to a content item duration indication.

According to another feature of the invention, the plurality of content items is received from a plurality of content sources. For example, content items may comprise both real time received content items as well as permanently available content items stored in a content memory. The different content items may be comprised in a selection list wherein the content items are ordered in response to a content item duration indication. The user may thus be assisted in the identification of content items having a suitable content item duration indication, irrespective of the content sources from which they are received.

According to a second aspect of the invention, an apparatus for providing a selection list of content items comprises: a content receiver for receiving a plurality of content items from at least one content source; a duration processor for determining a content item duration indication for each of the plurality of content items; a content item list processor for determining an ordered content item list by ordering the plurality of content items in response to the content item duration indication of each content item; and a user interface for presenting the ordered content item list as the selection list to a user.

### Brief description of the drawings

An embodiment of the invention will be described, by way of example only, with reference to the drawings, in which
FIG. 1 is an illustration of an apparatus for providing a selection list of content items in accordance with an embodiment of the invention; and
FIG. 2 illustrates a method of providing a selection list of content items in accordance with an embodiment of the invention.

### Description of preferred embodiments

The following description focuses on an embodiment for a video or audio consumer device, such as a Private Video Recorder (PVR), but it will be apparent that the invention is not limited to this application.

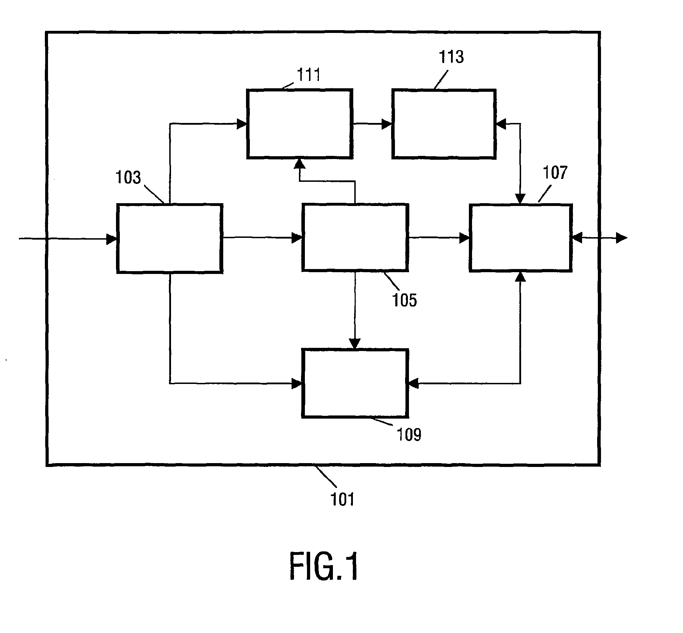

FIG. 1 is an illustration of an apparatus for providing a selection list of content items in accordance with an embodiment of the invention. Specifically, the apparatus is a PVR 101 capable of receiving and storing both video content items as well as audio content items, for example in the form of music encoded in accordance with the digital music compression scheme MP3.

The PVR 101 comprises a content receiver 103. The content receiver 103 receives content items from one or more suitable content item sources. In the preferred embodiment, the content receiver 103 mainly receives content by way of TV programmes broadcast in a suitable way.

Furthermore, in the preferred embodiment, the content receiver is capable of receiving content from a plurality of various content sources. Thus, the content receiver 103 receives content items in the form of video, audio and multimedia clips and programmes. Specifically, TV programmes are received from terrestrial radio broadcasts as well as from a digital cable connection. Likewise, radio programmes are received from conventional analogue radio transmissions as well as from digital radio broadcasts received through a cable connection. The content receiver 103 capable of receiving a plurality of content items from various sources may simply be implemented as the combination of a plurality of independent content receiver elements, where each element is dedicated to receiving content items of a specific nature from a specific source.

The received content items are converted to suitable digital formats and stored in a content memory 105 together with information associated with the content items. A content item may be received directly in a suitable format, such as an MPEG 2 format for a video transmission, and in this case no conversion is required. The stored information includes one or more attributes of the content item related to a content item duration.

The PVR 101 further comprises a user interface 107 for displaying content items and control information as well as for receiving user input. Specifically, the user interface 107 comprises a display or an interface for an external display, such as e.g. a video monitor or a TV. In the preferred embodiment, the user input is received by using a remote control communicating with the user interface 107. Hence, the user interface is operable to display various information to the user and to receive user inputs. Specifically, the user interface may display a selection list of content items, and a user may select one of these content items through a suitable activation of the remote control.

The PVR 101 additionally comprises a content presenter 109, which is coupled to the content memory 105, the content receiver 103 and the user interface 107. In response to a selection of a content item, the content presenter 109 is operable to retrieve the stored content from the content memory 105 and present it to the user via the user interface 107.

The PVR 101 further comprises a duration processor 111 for determining a content item duration indication for each of the plurality of content items received by the content receiver 103. Specifically, the duration processor 111 may for each content item derive a content item duration indication for each of the attributes of a total duration of each content item, a remaining duration of each content item, a remaining duration of each content item relative to a total duration of each content item, a received duration of each content item and/or a presented duration of each content item relative to a total duration of each content item. Hence, for each content item, the duration processor 111 determines one or more content item duration indications. The duration processor 111 is coupled to the content receiver 103 and the content memory 105.

The PVR 101 also comprises a content item list processor 113 for determining an ordered content item list by ordering the plurality of content items in response to the content item duration indication of each content item. Thus, the content item list processor 113 orders a list of the content items in accordance with one or more of the content item duration indications determined by the duration processor 111. For example, the content item list processor 113 may generate a list of content items ordered in response to the total duration of each content item.

The content item list processor 113 is coupled to the duration processor 111 and the user interface 107. The user interface 107 further comprises a functionality for receiving the ordered content item list, and presenting the list to the user of the PVR 101 as a selection list. Specifically, the user may select a content item by highlighting the content item in the selection list.

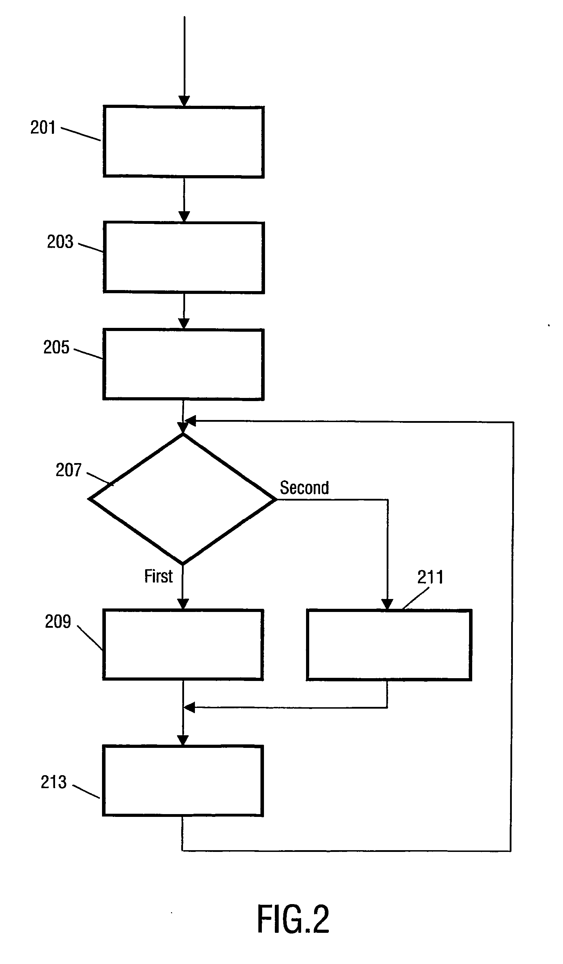

FIG. 2 illustrates a method of providing a selection list of content items in accordance with an embodiment of the invention. Specifically, FIG. 2 illustrates an embodiment wherein the selection list may be ordered according to a first or second duration indication criterion depending on a user preference. The method of FIG. 2 will be described with reference to the apparatus of FIG. 1.

The method starts in step 201 by a plurality of content items being received from at least one content source. The content items may be content items received by the content receiver 103, such as, for example, TV programmes, radio programmes, music clips, audio clips or multimedia clips. Additionally, the content items may be received from sources internal to the PVR 101, such as from the content memory 105. The content items of the selection list may thus, for example, be real-time content items being currently received, previously received and stored content items or internally generated content items. Hence, it is within the contemplation of the invention that any suitable content item from any suitable source may be included in the ordered selection list.

In step 203, the duration processor 111 determines a first duration indication for each of the content items to be included in the selection list. The determination may be realized by any suitable means and may, for example, be derived from duration data associated with the content item.

For example, many broadcast TV signals comprise associated content data including information on start times and end times of a specific programme. A total duration may, for example, be determined as the difference between them. A relative duration indication, such as the percentage of a programme received or remaining, may be derived from the start time and end time of a programme together with the current time. For this purpose, the PVR 101 preferably includes an internal clock.

In some embodiments, the duration indications may be determined from the Electronic Programme Guides (EPG) broadcast by a TV network. Alternatively or additionally, text analysis may be used to derive the relevant information from text sources, such as teletext. The information may further be obtained from external sources, such as, for example, by the duration processor 111 accessing a suitable website on the Internet to retrieve suitable programme information.

The content item duration indication may be determined for each content item that is received by the content receiver 103. It may further be stored in the content memory along with the content item. The duration processor 111 may retrieve this information from the content memory 105 when required. In addition, the content memory 105 may store information relating to how much of a stored content item has already been presented to the user. For example, a TV programme may have been stored and partially viewed, and the content memory 105 may store information indicating how much of the programme has already been viewed.

As a specific example, the duration processor 111 may determine a content item duration indication related to the total duration of a content item in step 203. Specifically, this may be the length of a TV programme.

In step 205, the duration processor 111 determines a second content item duration indication for each of the content items to be included in the selection list. The second content item duration indication is different from the first content item duration indication but may be based on the same information. As a specific example, the duration processor 111 may determine a content item duration indication as remaining time of a content item.

In step 207, it is determined if the selection list should be ordered in response to the first or second content item duration indication. In a specific embodiment, the list will be ordered as the last presented selection list until the user selects a different preference. Hence, step 207 comprises retrieving a stored preference value and selecting between the first and second ordering accordingly. The user may change the user preference value at any given time, thereby causing the ordering of the selection list to be changed. Specifically, the user may simply press a button on a remote control, causing the user interface 107 to change the user preference value and thus the selection list accordingly.

If the user preference indicates that the selection list should be ordered in accordance with the first content item duration indication, the content item list processor 113 in step 209 orders the content items in response to the first content item duration indication. Specifically, the content items may thus be arranged in the order of increasing or decreasing total duration.

If the user preference indicates that the selection list should be ordered in accordance with the second content item duration indication, the content item list processor 113 in step 211 orders the content items in response to the second content item duration indication. Specifically, the content items may thus be arranged in the order of increasing or decreasing remaining duration.

In step 213, the ordered content item list is presented to the user as a selection list. The user may, for example, select a content item by using directional user activations to highlight a content item.

In the embodiment of FIG. 1, the method returns to step 207. The iterations of steps 207 to 213 may be of a rate of several iterations per second. Therefore, a change of the user preference for the preferred order may result in an immediately reordered list. For example, during presentation of a selection list, the user may press a button on the remote control, thereby causing the selection list to virtually immediately change to a different order of the content items.

In other embodiments, step 213 will be followed by step 201, and specifically in some embodiments, step 213 will be followed by step 201 when a new content item is received and by step 207 when otherwise.

It will be apparent that the invention may readily be applied to more than two different content item duration indications. For example, three or more differently ordered lists of content items may be cycled through simply by the user pressing a button on the remote control.

It is within the contemplation of the invention that any suitable content item duration indication may be used for ordering the content items. Specifically, as described above, the total duration of a content item may be used such as, for example, the length of a TV programme, a video clip, a radio programme or a song, etc.

The content item duration indication may also be related to a remaining duration of a content item. Hence, for real-time broadcasts being received (but not stored), this can indicate how much of the programme can be viewed by a user, should he select it at this point in time. For a stored content item, the content duration indication may indicate how much of a programme is available from the content memory 105, and specifically how much time of a programme can be presented currently. Thus, for a partially viewed signal, the content item duration indication will indicate how much of a content item is left. For a content item which is stored, but not viewed, the content item duration indication will correspond to the total duration of the programme. The remaining time of a programme may be used directly. Alternatively or additionally a relative measure of the remaining duration of each content item relative to a total duration of each content item may be used. For example, the content item duration indication may relate to a percentage of a programme that has been viewed or remains to be received.

As a specific example, if a user has a specific time interval available for viewing a video content item; a suitably ordered selection list may quickly allow him to find content items that suit this time interval. For example, if the user is interested in watching a video programme for 30 minutes, the user may activate the selection list, and select it to be ordered in response to the remaining time of the content clips. The user may access the section of the selection list comprising the content items having a remaining time of about 30 minutes. The user may there be presented with the unviewed stored content items having a total duration of about 30 minutes, the partially viewed stored content items having a remaining unviewed duration of about 30 minutes and content items currently being received in real time (e.g. TV programmes) having a remaining time of about 30 minutes. The user is thus presented with all content items meeting his current requirement for a content item suiting a 30-minute time interval, and the preferred programmes may readily be selected.

Depending on the content item duration indication used for ordering the content items, the selection list may specifically be ordered in response to, for example, an absolute time passed, an absolute time remaining, a fraction (e.g. percentage) of time passed or a fraction (e.g. percentage) of time remaining.

In the preferred embodiment, different orderings of content items are used depending on a user preference. Preferably, the user preference is determined in response to a user input. Hence, the user may directly control the ordering of content items, for example, from activation of buttons on a remote control communicating with the user interface 107.

In one embodiment, the user preference is determined in response to at least one previous user preference input. Specifically, the user preference may be determined as that indicated in a previous user preference input until a new user preference input is received.

In one embodiment, the user preference may further be set depending on the current operating conditions. Hence, the content item list processor 113 may determine a user preference for each of a number of different operating conditions.

The user preference and/or the operating conditions may specifically be set manually by a user. For example, a user may set different user preferences for different times of day, such as, for example, one user preference for the morning, one for the afternoon and one for the evening and night. In other embodiments, the user preference and/or the operating condition may be determined automatically by the content item list processor 113. For example, the content item list processor 113 may divide the hours of the day into different time intervals and, within each time interval, monitor the user's selection of the ordering of content items. The content item list processor 113 may then set the user preference to the ordering used most frequently in each time interval.

When a selection list is to be presented, the content item list processor 113 may check the current operating condition, such as the time of day, determine which user preference corresponds to this operating condition and order the content items of the selection list accordingly. Hence, the user will automatically be provided with the ordering of content items that he prefers. A user may manually select a different ordering if that is preferred in the given instance.

The user preference may be determined in response to other operating conditions, such as a content source characteristic or a content item characteristic. For example, one ordering may automatically be selected if the content items are exclusively or mainly received from a broadcast transmission, whereas a different ordering may be used if all or most of the content items are received from the content storage 105. Likewise, one ordering may automatically be selected if the content items are exclusively or mainly of a first type, whereas a different ordering may be used if all or most of the content items are of a different second type of content. The first type of content may, for example, comprise video content items, whereas the second type of content comprises audio content items. Furthermore, the first and second type of contents may relate to different categories of the content of the content items, such as, for example, whether the content item relates to sports, films, music, etc.

It is within the contemplation of the invention that the content items may comprise content items of any suitable type or category. Specifically, the content items may comprise a combination of one or more of the categories of a video source content item such as a video clip or TV programme, an audio source content item such as an audio clip or a radio programme or a multimedia source content item such as a multimedia clip.

In the preferred embodiment, the plurality of content items is received from a plurality of content sources. Hence, the selection list preferably comprises content items from different content sources and of different types and categories, including, for example, TV programmes from broadcast sources, video clips and audio clips from content memory and multimedia clips from an Internet connection.

The invention can be implemented in any suitable form including hardware, software, firmware or any combination of them. However, the invention is preferably implemented as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims.

## Claims

1. A method of providing a selection list of content items the method comprising the steps of:
receiving (201) a plurality of content items from at least one content source;
determining (203) a first content item duration indication for each of the plurality of content items;
determining (205) a second content item duration indication for each of the plurality of content items; the second content item duration indication being different from the first content item duration indication;
determining (209) an ordered content item list by ordering the plurality of content items in response to the first or second content item duration indication depending on a user preference; and
presenting (213) the ordered content item list as the selection list to a user.

2. A method as claimed in claim 1, wherein the first or second content item duration indication is determined in response to a total duration of each content item.

3. A method as claimed in claim 1, wherein the first or second content item duration indication is determined in response to a remaining duration of each content item.

4. A method as claimed in claim 1, wherein the first or second content item duration indication is determined in response to a remaining duration of each content item relative to a total duration of each content item.

5. A method as claimed in claim 4, wherein the first or second content item duration indication comprises an indication of a fraction of a remaining duration of each content item with respect to the total duration of each content item.

6. A method as claimed in claim 1, wherein the first or second content item duration indication is determined in response to a received duration of each content item.

7. A method as claimed in claim 1, wherein the first or second content item duration indication is determined in response to a presented duration of each content item relative to a total duration of each content item.

8. A method as claimed in claim 4, wherein the first or second content item duration indication comprises an indication of a fraction of a presented duration of each content item with respect to the total duration of each content item.

9. A method as claimed in claim 1, wherein the user preference is determined in response to a user input.

10. A method as claimed in claim 1, wherein a single user activation causes the user preference to switch between being associated with the first content item duration indication and being associated with the second content item duration indication.

11. A method as claimed in claim 1, further comprising the step of determining the user preference in response to at least one previous user preference input.

12. A method as claimed in claim 1, further comprising the steps of:
determining (207) a preferred user preference for different operating conditions;
determining a current operating condition; and
setting the user preference as the preferred user preference for the current operating condition.

13. A method as claimed in claim 12, wherein the current operating condition is determined in response to at least one of the following characteristics:
a. a time characteristic
b. a content source characteristic; and
c. a content item content characteristic.

14. A method as claimed in claim 1, wherein the plurality of content items includes at least one content item from the group of
a. video sources;
b. video clips;
c. audio sources;
d. audio clips;
e. multimedia sources; and
f. multimedia clips.

15. A method as claimed in claim 1, wherein the plurality of content items is received from a plurality of content sources.

16. A computer program comprising computer program code means adapted to perform the steps according to any one of the preceding claims, when said program is run on a computer.

17. An apparatus (101) for providing a selection list of content items the apparatus comprising:
a content receiver (103) for receiving a plurality of content items from at least one content source;
a duration processor (111) for determining a first content item duration indication for each of the plurality of content items, and for determining a second content item duration indication for each of the plurality of content items; the second content item duration indication being different from the first content item duration indication;
a content item list processor (113) for determining an ordered content item list by ordering the plurality of content items in response to the first or second content item duration indication depending on a user preference; and
a user interface (107) for presenting the ordered content item list as the selection list to a user.

## Patentansprüche

1. Verfahren zur Bereitstellung einer Selektionsliste mit Inhaltsitems, wobei das Verfahren die nachfolgenden Verfahrensschritte umfasst:
- das Empfangen (201) einer Anzahl Inhaltsitems aus wenigstens einer Inhaltsquelle,
- das Ermitteln (203) einer ersten Inhaltsitemdauerangabe jedes der vielen Inhaltsitems,
- das Ermitteln (205) einer zweiten Inhaltsitemdauerangabe für jedes der vielen Inhaltsitems; wobei die zweite Dauerangabe anders ist als die erste Inhaltsitemdauerangabe,
- das Ermitteln (209) einer geordneten Item Inhaltsitemliste durch Ordnung der vielen Inhaltsitems in Reaktion auf die erste oder die zweite Inhaltsitemdauerangabe, und zwar je nach dem Vorzug des Benutzers, und
- das Präsentieren (213) der geordneten Inhaltsliste als die Selektionsliste an einen Benutzer

2. Verfahren nach Anspruch 1, wobei die erste oder die zweite Inhaltsitemdauerangabe in Reaktion auf eine gesamte Dauer jedes Inhaltsitems ermittelt wird.

3. Verfahren nach Anspruch 1, wobei die erste oder die zweite Inhaltsitemdauerangabe in Reaktion auf eine Restdauer jedes Inhaltsitems ermittelt wird.

4. Verfahren nach Anspruch 1, wobei die erste oder die zweite Inhaltsitemdauerangabe in Reaktion auf eine Restdauer jedes Inhaltsitems gegenüber einer Gesamtdauer jedes Inhaltsitems ermittelt wird.

5. Verfahren nach Anspruch 4, wobei die erste oder die zweite Inhaltsitemdauerangabe eine Angabe eines Bruchteils einer Restdauer jedes Inhaltsitems gegenüber der gesamten Dauer jedes Inhaltsitems umfasst.

6. Verfahren nach Anspruch 1, wobei die erste oder die zweite Inhaltsitemdauerangabe in Reaktion auf eine empfangene Dauer jedes Inhaltsitems ermittelt wird.

7. Verfahren nach Anspruch 1, wobei die erste oder die zweite Inhaltsitemdauerangabe in Reaktion auf eine präsentierte Dauer jedes Inhaltsitems gegenüber einer Gesamtdauer jedes Inhaltsitems ermittelt wird.

8. Verfahren nach Anspruch 4, wobei die erste oder die zweite Inhaltsitemdauerangabe eine Angabe eines Bruchteils einer präsentierten Dauer jedes Inhaltsitems gegenüber der gesamten Dauer jedes Inhaltsitems umfasst.

9. Verfahren nach Anspruch 1, wobei der Vorzug des Benutzers in Reaktion auf eine Benutzereingabe ermittelt wird.

10. Verfahren nach Anspruch 1, wobei eine einzige Benutzeraktivierung dafür sorgt, dass der Vorzug des Benutzers zwischen einer Assoziation mit der ersten Inhaltsitemdauerangabe und einer Assoziation mit der zweiten Inhaltsitemdauerangabe umgeschaltet wird.

11. Verfahren nach Anspruch 1, wobei dieses Verfahren weiterhin den nachfolgenden Verfahrensschritt umfasst, und zwar das Ermitteln des Benutzervorzugs in Reaktion auf wenigstens einer vorhergehenden Eingabe des Benutzervorzugs.

12. Verfahren nach Anspruch 1, das weiterhin die nachfolgenden Verfahrensschritte umfasst:
- das Ermitteln (207) eines bevorzugten Benutzervorzugs für verschiedene Betriebszustände,
- das Ermitteln eines aktuellen Betriebszustandes, und
- das Einstellen des Benutzervorzugs als bevorzugten Benutzervorzugs für den aktuellen Betriebszustand.

13. Verfahren nach Anspruch 12, wobei der aktuelle Betriebszustand in Reaktion auf wenigstens eines der nachfolgenden Kennzeichen ermittelt wird:
a. ein Zeitkennzeichen,
b. ein Inhaltsquellenkennzeichen, und
c. ein Inhaltsiteminhaltskennzeichen.

14. Verfahren nach Anspruch 1, wobei die vielen Inhaltsitems wenigstens ein Inhaltsitem aus der Gruppe von:
a. Videoquellen,
b. Videoclips,
c. Audioquellen,
d. Audioclips,
e. Multimediaquellen und
f. Multimediaclips enthalten.

15. Verfahren nach Anspruch 1, wobei die vielen Inhaltsitems aus vielen Inhaltsquellen erhalten werden.

16. Computerprogramm mit Computerprogrammcodemitteln, vorgesehen zum Durchführen der Verfahrensschritte nach einem der vorstehenden Ansprüche, wenn das genannte Programm in einem Computer läuft.

17. Anordnung (101) zum Bereitstellen einer Selektionsliste mit Inhaltsitems, wobei diese Anordnung Folgendes umfasst:
- einen Inhaltsempfänger (103) zum Empfangen einer Anzahl Inhaltsitems aus wenigstens einer Inhaltsquelle,
- einen Dauerprozessor (111) zum Ermitteln einer ersten Inhaltsitemdauerangabe für jedes Item der vielen Inhaltsitems und zum Ermitteln einer zweiten Inhaltsitemdauerangabe für jedes Item der vielen Inhaltsitems; wobei die zweite Inhaltsitemdauerangabe anders ist als die erste Inhaltsitemdauerangabe,
- einen Inhaltsitemlistenprozessor (113) zum ermitteln einer geordneten Inhaltsitemliste durch Ordnung der vielen Inhaltsitems in Reaktion auf die erste oder die zweite Inhaltsitemdauerangabe, und zwar abhängig von einem Benutzervorzug; und
- eine Benutzerschnittstelle (107) zum Anbieten der geordneten Inhaltsitemliste als die Selektionsliste an einen Benutzer.

## Revendications

1. Procédé fournissant une liste de sélection d'éléments de contenu, le procédé comprenant les étapes de :
réception (201) d'une pluralité d'éléments de contenu d'au moins une source de contenu ;
détermination (203) d'une première indication de durée d'élément de contenu pour chacun de la pluralité d'éléments de contenu ;
détermination (205) d'une deuxième indication de durée d'élément de contenu pour chacun de la pluralité d'éléments de contenu ; la deuxième indication de durée d'élément de contenu étant différente de la première indication de durée d'élément de contenu ;
détermination (209) d'une liste d'éléments de contenu ordonnée en ordonnant la pluralité d'éléments de contenu en réponse à la première ou à la deuxième indication de durée d'élément de contenu selon une préférence de l'utilisateur; et
présentation (213) à un utilisateur de la liste d'éléments de contenu ordonnée en tant que liste de sélection.

2. Procédé selon la revendication 1, **caractérisé en ce que** la première ou la deuxième indication de durée d'élément de contenu est déterminée en réponse à une durée totale de chaque élément de contenu.

3. Procédé selon la revendication 1, **caractérisé en ce que** la première ou la deuxième indication de durée d'élément de contenu est déterminée en réponse à une durée restante de chaque élément de contenu.

4. Procédé selon la revendication 1, **caractérisé en ce que** la première ou la deuxième indication de durée d'élément de contenu est déterminée en réponse à une durée restante de chaque élément de contenu par rapport à une durée totale de chaque élément de contenu.

5. Procédé selon la revendication 4, **caractérisé en ce que** la première ou la deuxième indication de durée d'élément de contenu comprend une indication d'une fraction d'une durée restante de chaque élément de contenu par rapport à la durée totale de chaque élément de contenu.

6. Procédé selon la revendication 1, **caractérisé en ce que** la première ou la deuxième indication de durée d'élément de contenu est déterminée en réponse à une durée reçue de chaque élément de contenu.

7. Procédé selon la revendication 1, **caractérisé en ce que** la première ou la deuxième indication de durée d'élément de contenu est déterminée en réponse à une durée présentée de chaque élément de contenu par rapport à une durée totale de chaque élément de contenu.

8. Procédé selon la revendication 4, **caractérisé en ce que** la première ou la deuxième indication de durée d'élément de contenu comprend une indication d'une fraction d'une durée présentée de chaque élément de contenu par rapport à la durée totale de chaque élément de contenu.

9. Procédé selon la revendication 1, **caractérisé en ce que** la préférence de l'utilisateur est déterminée en réponse à une entrée de l'utilisateur.

10. Procédé selon la revendication 1, **caractérisé en ce qu'**une activation d'utilisateur unique provoque le basculement de la préférence de l'utilisateur entre le fait d'être associé à la première indication de durée d'élément de contenu et le fait d'être associé à la deuxième indication de durée d'élément de contenu.

11. Procédé selon la revendication 1, comprenant en outre l'étape de détermination de la préférence de l'utilisateur en réponse à au moins une entrée précédente de préférence de l'utilisateur.

12. Procédé selon la revendication 1, comprenant en outre les étapes de :
détermination (207) d'une préférence préférée de l'utilisateur en réponse à au moins une entrée précédente de préférence pour des conditions de fonctionnement différentes;
détermination d'une condition de fonctionnement courante ; et
réglage de la préférence de l'utilisateur en tant que préférence préférée de l'utilisateur pour la condition de fonctionnement courante.

13. Procédé selon la revendication 12, **caractérisé en ce que** la condition de fonctionnement courante est déterminée en réponse à au moins l'une des caractéristiques suivantes :
a. une caractéristique de temps
b. une caractéristique de source de contenu ; et
c. une caractéristique de contenu d'élément de contenu.

14. Procédé selon la revendication 1, **caractérisé en ce que** la pluralité d'éléments de contenu comprend au moins un élément de contenu appartenant au groupe comprenant :
a. des sources vidéo ;
b. des extraits vidéo ;
c. des sources audio ;
d. des extraits audio ;
e. des sources multimédia ; et
f. des extraits multimédia.

15. Procédé selon la revendication 1, **caractérisé en ce que** la pluralité d'éléments de contenu est reçue d'une pluralité de sources de contenu.

16. Programme informatique comprenant un moyen à code de programme informatique apte à exécuter des étapes de l'une quelconque des revendications précédentes, lorsque ledit programme est exécuté sur un ordinateur.

17. Appareil (101) fournissant une liste de sélection d'éléments de contenu, l'appareil comprenant :
un récepteur de contenu (103) pour recevoir une pluralité d'éléments de contenu d'au moins une source de contenu ;
un processeur de durée (111) pour déterminer une première indication de durée d'élément de contenu pour chacun de la pluralité d'éléments de contenu et pour déterminer une deuxième indication de durée d'élément de contenu pour chacun de la pluralité d'éléments de contenu ; la deuxième indication de durée d'élément de contenu étant différente de la première indication de durée d'élément de contenu ;
un processeur de liste d'éléments de contenu (113) pour déterminer une liste d'éléments de contenu ordonnée en ordonnant la pluralité d'éléments de contenu en réponse au fait que la première ou à la deuxième indication de durée d'élément de contenu dépend d'une préférence de l'utilisateur ; et
une interface utilisateur (107) pour présenter à un utilisateur la liste d'éléments de contenu ordonnée en tant que liste de sélection.
